# EUROPEAN PATENT SPECIFICATION

(11) **EP 3 674 667 B1**
(45) Date of publication and mention of the grant of the patent: **10.11.2021**
(21) Application number: 19218446.3
(22) Date of filing: 20.12.2019
(51) Int. Cl.: G01C 21/36, G08G 1/14

(54) **METHOD AND APPARATUS FOR RENDERING A PARKING SEARCH ROUTE**
VERFAHREN UND VORRICHTUNG ZUR DARSTELLUNG EINER PARKSUCHROUTE
PROCÉDÉ ET APPAREIL DE RENDU D'UN ITINÉRAIRE DE RECHERCHE DE STATIONNEMENT

(30) Priority: 26.12.2018 US 201816232808
(43) Date of publication of application: 01.07.2020
(73) Proprietor: HERE Global B.V., 5611 ZT Eindhoven (NL)
(72) Inventor: BEAUREPAIRE, Jerome, Chicago, IL 60606 (US); KROME, Sven, Chicago, IL 60606 (US)
(74) Representative: Potter Clarkson

(56) References cited:
- US-A1- 2005 107 993
- US-A1- 2014 214 319
- US-A1- 2016 061 618

## Description

### BACKGROUND

Providing navigation support to users is an important function for map service providers. Modern devices such as sophisticated navigation and communication systems can enable users or drivers of vehicles to have a better understanding of what is ahead or approaching on a road or route (e.g., points of interest (POIs), complicated interchanges, traffic status, road closures, etc.). In addition, providing parking support information (e.g., parking locations and/or parking availability) is another important function for map service providers. Parking support information is particularly useful in areas (e.g., a city center) where finding available parking may be time consuming and/or frustrating. However, presenting or visualizing a parking search route to users in a quickly readable manner can be challenging where such routes overlap, intersect, and/or loop, etc. until an available parking space is found within the vicinity of a destination.

US 2016/061618 A1 discloses a technique for navigating a vehicle to a parking space.

US 2014/214319 A1 discloses and computer system and method for search of a parking spot.

US 2005/107993 A1 discloses a method of generating data representative of a geographical network such as a road network.

### SOME EXAMPLE EMBODIMENTS

As a result, there is a need for presenting to a user of a vehicle an efficient visual representation of a complex parking search route.

Aspects of the invention are set out in the appended claims.

According to one embodiment, a computer-implemented method according to claim 1 is provided.

According to another embodiment, an apparatus according to claim 8 is provided.

According to another embodiment, a non-transitory computer-readable storage medium according to claim 10 is provided.

### BRIEF DESCRIPTION OF THE DRAWINGS

The embodiments of the invention are illustrated by way of example, and not by way of limitation, in the figures of the accompanying drawings:
FIG. 1 is a diagram of a system capable of presenting to a user of a vehicle an efficient visual representation of a complex route for finding a parking space for the vehicle (i.e., a parking search route), according to one embodiment;
FIGs. 2A and 2B are diagrams illustrating example visualizations of a complex parking search route;
FIGs. 3A-3G are diagrams illustrating the process of FIG. 1 for presenting to a user of a vehicle an efficient visual representation of a complex route for finding a parking space for the vehicle, according to one embodiment;
FIG. 4 is a diagram of the components of a routing platform, according to one embodiment;
FIG. 5 is a flowchart of a process for presenting to a user of a vehicle an efficient visual representation of a complex route for finding a parking space for the vehicle, according to one embodiment;
FIGs. 6A-6D are diagrams of example user interfaces for presenting to a user of a vehicle an efficient visual representation of a complex route for finding a parking space for the vehicle, according to one embodiment;
FIG. 7 is a diagram of a geographic database, according to one embodiment;
FIG. 8 is a diagram of hardware that can be used to implement an embodiment of the invention;
FIG. 9 is a diagram of a chip set that can be used to implement an embodiment of the invention; and
FIG. 10 is a diagram of a mobile terminal (e.g., handset or vehicle or part thereof) that can be used to implement an embodiment of the invention.

### DESCRIPTION OF SOME EMBODIMENTS

Examples of a method, apparatus, and computer program for presenting to a user of a vehicle an efficient visual representation of a complex route for finding a parking space for the vehicle are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

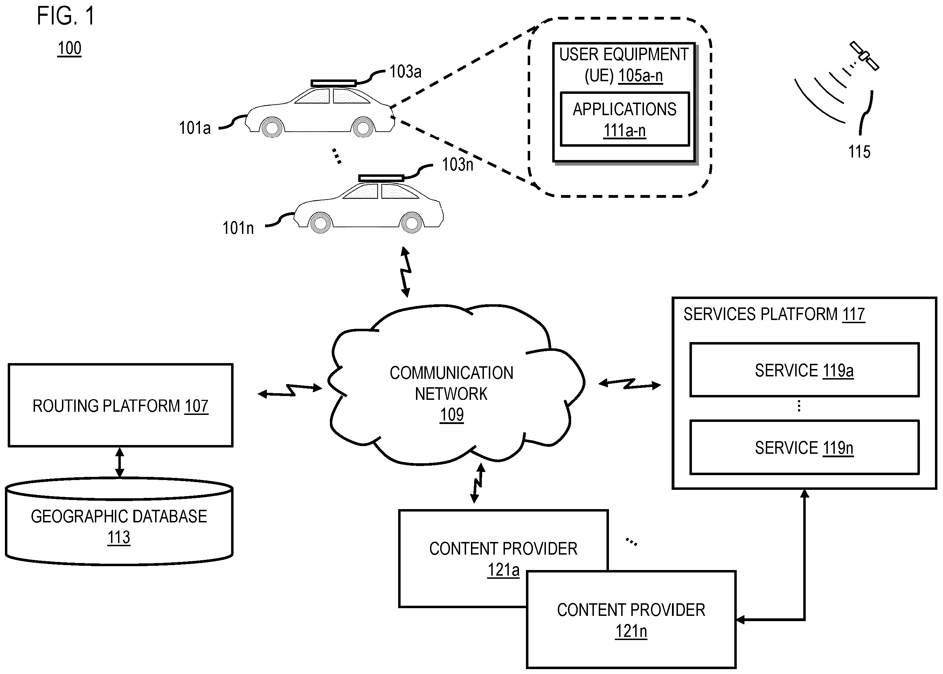

FIG. 1 is a diagram of a system capable of presenting to a user of a vehicle an efficient visual representation of a complex route for finding a parking space for the vehicle (i.e., a parking search route), according to one embodiment. As described above, providing navigation support to users is an important function for map service providers. By way of example, a user may be a driver of a standard vehicle (e.g., a car, a truck, a motorcycle, etc.), a passenger of an autonomous or highly-assisted vehicles (HAD) vehicle, a cyclist, a pedestrian, or a combination thereof. Navigation systems (e.g., an embedded car navigation system, a mobile device, etc.) can enable users to have a better understanding of what is coming ahead or approaching on a road or route on which they are traveling (e.g., POIs, complicated interchanges, traffic status, road closures, detours, etc.). In some instances, the rendered route may also include secondary or tertiary or other information. For example, certain portions of the route may be rendered in a color to represent a level of traffic and/or delay. In another example, multiple or alternative routes may be simultaneously rendered to provide a user with various options to reach a given destination. As the complexity of the routes and/or associated information being conveyed increases, service providers face significant challenges to presenting route information in a way that can be quickly and easily understood by end users (i.e., without confusion of the user).

One example of a potentially complex parking search route is a route that continues, overlaps, intersects, and/or loops, etc. until an available parking space is found within the vicinity of a destination (i.e., the route may be considered infinite and/or endless). As mentioned above, parking guidance and/or parking related information is also an integral function for map service providers. For example, a user may want to know where she or he can find parking (e.g., on-street parking, car parks, parking garages, etc.) at or near a given destination and she or he may also want to know whether parking is or will be available at such locations and times. In many instances, a user wants to know this information in real time or substantially real time. Parking guidance and/or parking search routes may be particularly useful to users in areas where finding a parking space is often time consuming and/or frustrating due to a limited number of free spaces and/or many users simultaneously looking for parking(e.g., city centers). In addition, drivers need to pay attention to applicable driving restrictions (e.g., no left turns) while monitoring the possibly free spaces, which can also make finding parking in such areas challenging.

However, a parking search route or other complex navigation route may become very hard to read in a quick and efficient manner when being visualized or rendered in a user interface (UI) to a user in a vehicle. For example, a complex route can be calculated to have a user or a driver circle within a defined area (e.g., a geo-fenced area) around a specified destination. As a result, different portions of the presented route may overlap, intersect (e.g., self-intersect or cross over itself), even loop making it difficult for a user to know what is coming ahead and/or confused by this information. In addition, providing a user with all available information/options/alternatives can make the parking search route convoluted and difficult to quickly understand, especially in a user interface (e.g., a mobile device). In some instances, such displays may be distracting and/or may not comply with applicable regulations (e.g., National Highway Traffic Safety Administration (NHTSA) prohibiting users from looking at a display too long to understand what actions to take (i.e., keeping one's eyes away from the road).

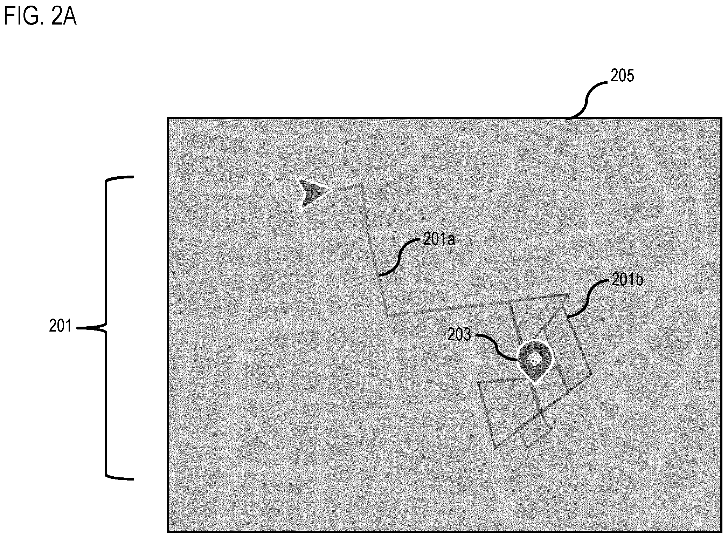

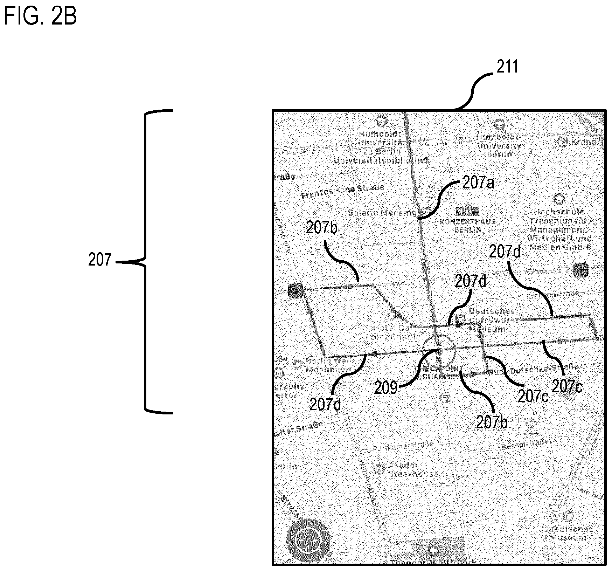

FIGs. 2A and 2B are diagrams illustrating examples of visualizations of complex parking search routes. Referring to FIG. 2A, an example route 201 to the destination 203 is rendered or visualized in the UI 205 (e.g., an embedded navigation system). In this example, the segment 201a of the route 201 comprises destination guidance and the segment 201b comprises a parking search route for finding parking in proximity to the destination 203. In this instance, it may be hard to read the route 201. For example, it may be unclear where the segment 201a stops and the segment 201b starts due a portion of the segment 201a overlapping a portion of the segment 201b. Specifically, a user may want to know where to begin looking for an available parking space. In addition, the segment 201b loops around and intersects with itself (i.e., crossing itself), possibly making it difficult for a user to know where to go and/or what is being recommended.

Referring to FIG. 2B, an example route 207 to the destination 209 is rendered or visualized in the UI 211 (e.g., a mobile device). In this example, the segment 207a comprises destination guidance and the segments 207b-207d comprise links of a parking search route for finding parking in proximity to the destination 209. Specifically, in this example, the segments 207b-207d are rendered in colors based on a determined parking probability (e.g., red, orange, and green). In this instance, rather than assisting the user, the additional layers of information may make the route 207 difficult to read. For example, a user may have a hard time discerning where one segment stops, and another starts, particularly where one or more segments intersect and/or loop around each other.

To address these technical problems, a system 100 of FIG. 1 introduces a capability to visualize a complex parking search route in a convenient way by dynamically computing the limit or extent of the route to be presented to a user of a vehicle at one time (i.e., the initial extent) and by updating the extent and/or presentation to visualize additional route segments as the user travels along the route. In other words, the system 100 may only visualize to the user of the vehicle the portion of the route that is immediately relevant to the user at her or his present location despite the system 100's ability to visualize or present the entire and/or potentially endless route to an available parking space in the vicinity of the destination. Then, once the user moves along the route, the system 100 can present a new limited portion of the route (i.e., another extent) to the user based on the user's new location. In one embodiment, to make a complex parking search route useful and visually appealing, the system 100 reduces the amount of information that is simultaneously presented to the user (e.g., through an embedded navigation system, mobile device, or a combination thereof), hence the system 100 computes a route and then simplifies the rendering of the route to advantageously help users to more quickly view and absorb the route and related information (e.g., to find an available parking spot). In one embodiment, the system 100 reduces the information and/or simplifies the route through the detection of one or more "route limits" that determine how much of the route is presented to a user at one time as described below. Consequently, a user can know what is coming ahead without being confused by too much information and/or irrelevant information. Although the disclosure is primarily described herein with respect to presenting a parking search route to a user of a vehicle, it is contemplated that the disclosure may apply to any complex navigation route wherein a user is in a vehicle and the user and/or the vehicle (e.g., an autonomous vehicle) is searching for someone (e.g., one or more additional passengers), something (e.g., one or more pick-up/drop-off locations, one or more gas or charging stations, etc.), or a combination thereof and the visualized route may continue, overlap, intersect, and/or loop, etc. until the someone and/or something is located.

In one embodiment, the system 100 of FIG. 1 may include one or more vehicles 101a-101n (also collectively referred to herein as vehicles 101) configured with one or more vehicle sensors 103a-103n (also collectively referred to herein as vehicle sensors 103)(e.g., a global positioning system (GPS) sensor), one or more user equipment (UE) 105a-105n (also collectively referred to herein as UEs 105)(e.g., an embedded navigation system, a mobile device, a smartphone, etc.) having connectivity to a routing platform 107 via a communication network 109. By way of example, the vehicles 101 may be standard vehicles (e.g., a car, a truck, a motorcycle, etc.), autonomous vehicles, or highly assisted driving (HAD) vehicles. Although the vehicles 101 are depicted as automobiles, it is contemplated that the vehicles 101 may be any type of transportation that parks, at least occasionally (e.g., a car, a truck, a motorcycle, a bike, a scooter, etc.).

In one embodiment, the system 100 first determines a destination (e.g., a restaurant, a movie theater, a shop, etc.) that does not have convenient available parking (e.g., an attached parking lot or parking structure). In one instance, the system 100 determines the destination based on a user manually setting or inputting the destination using one or more applications 111a-111n (also collectively referred to herein as applications 111) (e.g., a navigation application, a mapping application, a parking application, etc.) associated with the UEs 105.

In one embodiment, the system 100 then determines the parking spot availability in a zone around a destination or within a threshold of the destination and computes the best possible route to the parking spot. In one instance, the best possible route comprises an infinite/endless route. For example, the system 100 may continue to calculate and to render the parking search route until the user finds parking and has parked. Further, in one instance, if a user is unable to find parking at or around the given destination (e.g., within a threshold distance of the destination), the system 100 may suggest another comparable destination and continue or extend the route to that destination. In one embodiment, the system 100 determines the best possible route depending on parking availability, driving situation, and walking distance. In one instance, the system 100 may determine the parking spot availability based on information or data stored in or accessible via a geographic database (e.g., a geographic database 113), a digital map, or a combination thereof. In one embodiment, the system 100 may also determine the parking spot availability based on one or more parking related factors. For example, the one or more relevant parking related factors may include temporal factors (e.g., time of day, day of week); contextual factors (e.g., starting and/or ending times of an event); regulatory factors (e.g., no parking permitted), or a combination thereof. In one embodiment, the system 100 can define the zone based on a driving situation and/or a walking distance. For example, in one instance, the system 100 can compute the zone to include at least one or more roads or links that would permit the user or the driver to find available parking. In one embodiment, the threshold can be time-based, distance-based, or a combination thereof. By way of example, the system 100 can define the zone such that when a user finds parking, they are less than a certain distance and/or an amount of time away from the destination (e.g., within walking distance).

In one embodiment, the system 100 identifies when the readability of the parking search route would become low if visualized to a user all at one time and, therefore, leading to bad user experience. In one instance, the system 100 determines the readability of the route by computing the structural and aesthetical components of the route (i.e., "route limits") such as intersections, overlaps, turns, walk time, etc. In one embodiment, the system 100 determines the so called "limit" of the route to be rendered or "route limits" based on one or more of the following rules: (1) road segments should not overlap; (2) route segments should ideally not intersect or cross; (3) route segments should ideally not make loops; and (4) some availability threshold may be considered by the system 100 for the route rendering as well. In other words, if a user is likely to quickly find a spot, the route displayed by the system 100 may be shorter than the same path which would have lower parking chances. By way of example, an overlapping segment is a segment that is rendered in opposite directions on the same road in connection with a destination such that two segments overlap each other. A looping segment, for example, is a segment that passes through the same node (e.g., an intersection) in connection with a destination without overlapping. In both instances, the route may be difficult for a user to read without being confused.

In one embodiment, the system 100 only displays or presents the segments of the parking search route up until the computed virtual limit of the route rendering (i.e., the route meets a criterion for complexity). In one instance, the system 100 renders only the segments that can be displayed without potential confusion to the user despite the system 100's ability to render the entire route to the destination. In one embodiment, the system 100 can "unlock" the route (i.e., render the route) when a driver of a vehicle 101 passes the intersection point with the "limit" of the parking search route. In one embodiment, the system 100 can render or visualize the route up to a certain probability of finding a parking space. For example, the system 100 can render shorter routes when a user or a driver of a vehicle 101 is passing through road segments with a high probability of having potential parking spaces for the vehicle 101 and the system 100 can render longer routes when a user or a driver of a vehicle 101 is passing through road segments with a low probability of having potential parking spaces for the vehicle 101. In one embodiment, the system 100 can determine the probability of available parking by collecting data or information from the geographic database 113 relative to the one or more road segments.

In one embodiment, the system 100 can enable a user to preview one or more "future" portions of the parking search route through one or more interactions (e.g., touch, voice, gesture, etc.). The system 100 renders a route extension icon at the end of the currently visible route (i.e., the initial extent). In one embodiment, the system 100 can enable the user to extend the rendering of the route (e.g., beyond the computed "limit") based on determining one or more interactions by the user. For example, a user can manually adjust the limit of the route (e.g., via an application 111) to see how it further expands (e.g., to let a friend following behind know where additional parking may be available). In one instance, the route could also expand when a vehicle 101 speed is null (e.g., the vehicle 101 is stopped at a traffic light or a stop sign) so that the user can preview a few more maneuvers. In one embodiment, the system 100 can also enable a user to extend the route through a voice command (e.g., "show me more"). In one embodiment, the system 100 returns the rendering back to the previous state after the user releases/finishes her or his manual interaction, so that the user-friendly guidance of the system 100 can continue as described above.

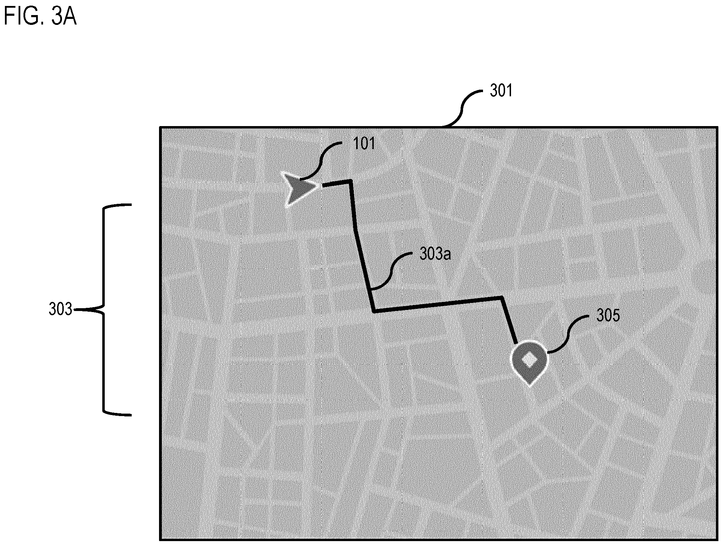

FIGs. 3A-3G are diagrams illustrating the process of FIG 1 for presenting to a user of a vehicle an efficient visual representation of a complex route for finding a parking space for the vehicle, according to one embodiment. In one embodiment, the system 100 generates a UI 301 for a UE 105 (e.g., an embedded navigation system, a mobile device, or a combination thereof) to enable a visualization of the route 303. In this example, the system 100 determines that a user or a driver of a vehicle 101 will need a parking spot at or near the destination 305. By way of example, the system 100 may determine the destination 305 based on an input from the user via an application 111 (e.g., a navigation application). In this example, the user or the driver of the vehicle 101 may first want to know how to get to the destination 305 and then where she or he may park. In one embodiment, the system 100 identifies when the readability of the route 303 will become low, leading to a potentially bad user experience. In this instance, the system 100 may render or present to the user or the driver of the vehicle 101 only the portion of the route 303 (e.g., segment 303a) that is within an aesthetic and/or readability limit given the determined location of the user or the driver of the vehicle 101, as depicted in FIG. 3A. For example, the system 100 can determine that at the current location and/or time, any parking related information would make the route 303 hard to read and likely to confuse the user or the driver of the vehicle 101 and, therefore, should not be presented at this time despite the system 100's ability to do so.

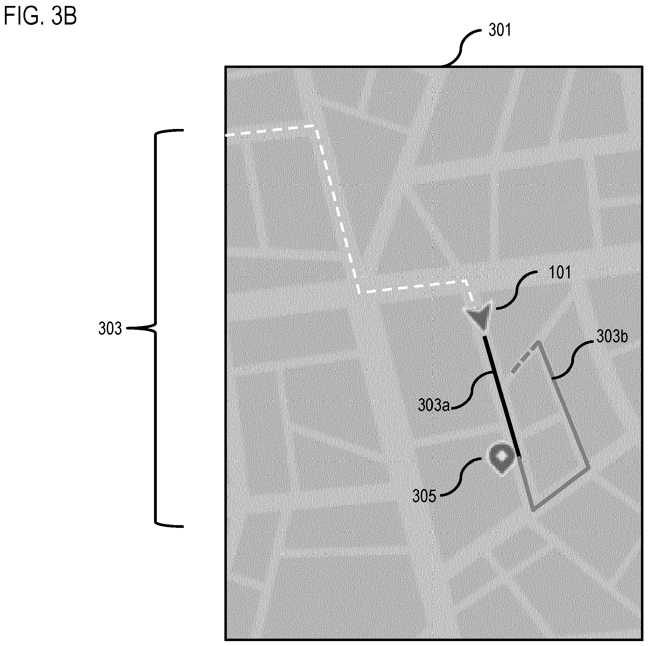

Referring to FIG. 3B, in one embodiment, the system 100 only displays the segments (e.g., 303a and 303b) until the route 303 reaches a computed limit (e.g., a route limit, a criterion for complexity, or a combination thereof). In one embodiment, the system 100 adapts the rendering of the route 303 dynamically and extends this "limit" when possible. In this example, the system 100 may render or extend the route 303 up until the point where the segment 303b would intersect with the segment 303a. In this instance, the segment 303b comprises a parking search route as opposed to the destination guidance portion 303a. In one embodiment, the system 100 discontinues rendering the portions of the route 303 that the user or the driver has already traveled (e.g., portions of segment 303a) to simplify and to improve the visual appeal of the route 303. In one embodiment, the system 100 can update or re-render the route 303 in real time or substantially real time based on the location of the user or the driver of the vehicle 101 relative to the route 303 and/or the destination 305. In one embodiment, the system 100 can determine the location of the user or the driver of the vehicle 101 by collecting sensor data from the vehicle sensors 103, the satellites 115, or a combination thereof.

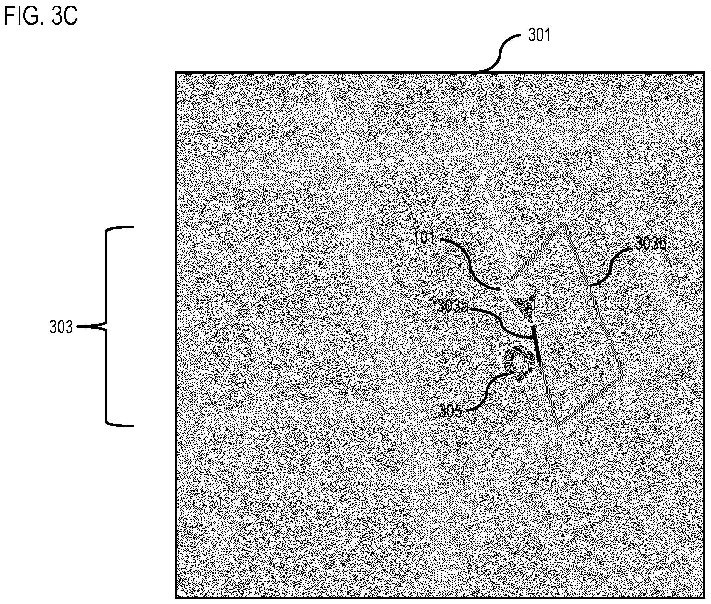

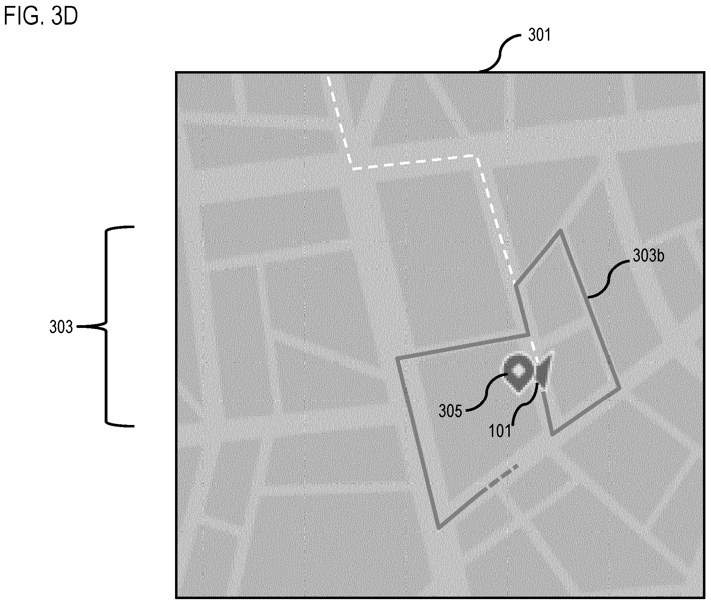

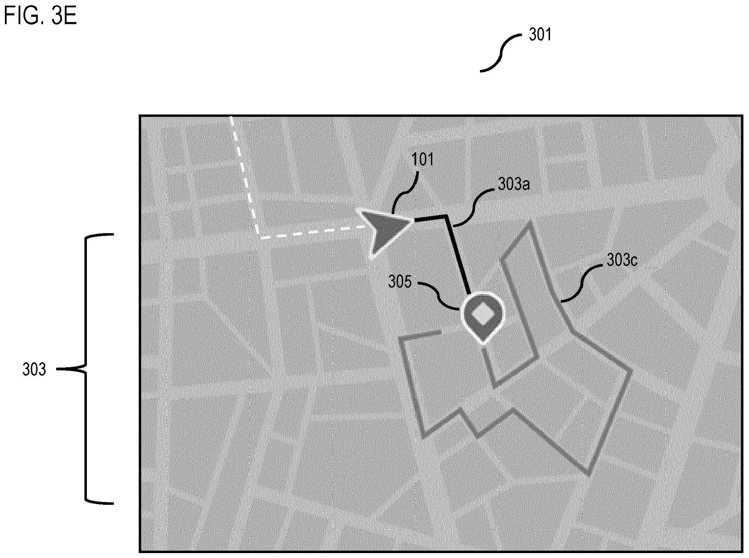

As shown in FIG. 3C, in one embodiment, once the system 100 determines that the user or the driver of the vehicle 101 has passed the location where the segment 303b would have previously intersected with the segment 303a, the system 100 can continue rendering or extending the route 303 accordingly. In one embodiment, the system 100 continues to render or to extend the route 303 up until the limit and/or until the user or the driver of the vehicle 101 finds parking. Referring to FIG. 3D, in this example, the system 100 can determine that the user or the driver of the vehicle 101 still requires parking search assistance; however, the segment 303b is about to intersect and/or overlap with itself. Accordingly, in one embodiment, the system 100 will not present the route 303 past this location until the user or the driver of the vehicle 101 proceeds further. As shown in FIG. 3E, in one embodiment, the system 100 can enable a user to view an alternative route 303 (e.g., segment 303c) so long as the route 303 does not include any overlapping and/or intersecting paths (i.e., can be displayed without confusion of the user).

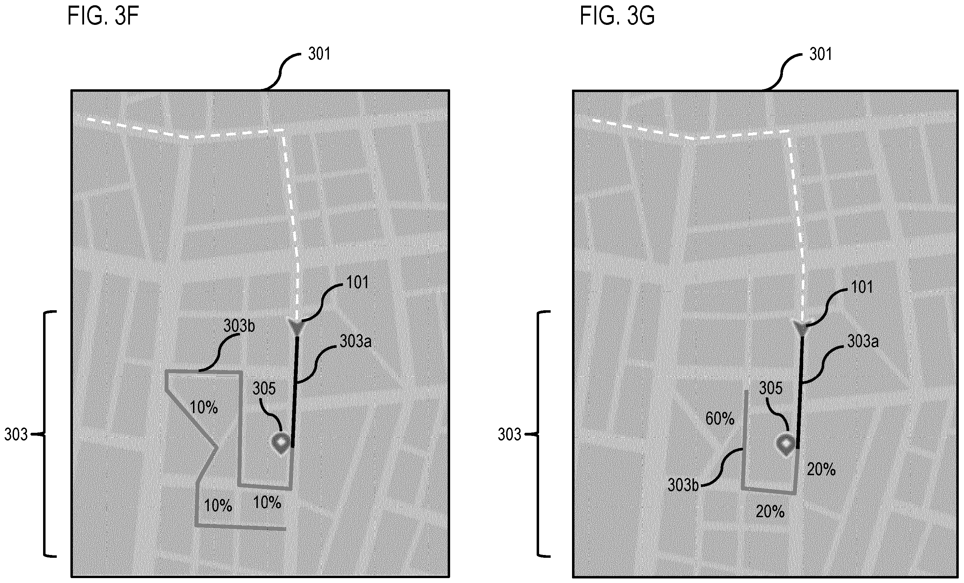

In one embodiment, the system 100 can render the route 303 up to a certain probability value of finding a parking space. For example, the route 303 rendered by the system 100 may be shorter where the user of the vehicle 101 is passing through portions of segment 303b that have a relatively high probability of finding parking for the vehicle 101 and longer where the user or the vehicle 101 is passing though portions of segment 303b that have a relatively low probability of finding parking for the vehicle 101, as depicted in FIGs. 3F and 3G, respectively. In one embodiment, the system 100 may determine the probabilities of the respective portions or segments based on data or information stored in the geographic database 113. In one instance, the system 100 may render each portion of the segment 303b with a respective percentage of likelihood or probability of finding parking, a color suggestive of the respective probabilities, or a combination thereof. For example, the system 100 may render the segment 303b of FIG. 3F corresponding to 10% as red and the system 100 may render the segments 303b of FIG. 3G corresponding to 20% and 60% as yellow and green, respectively.

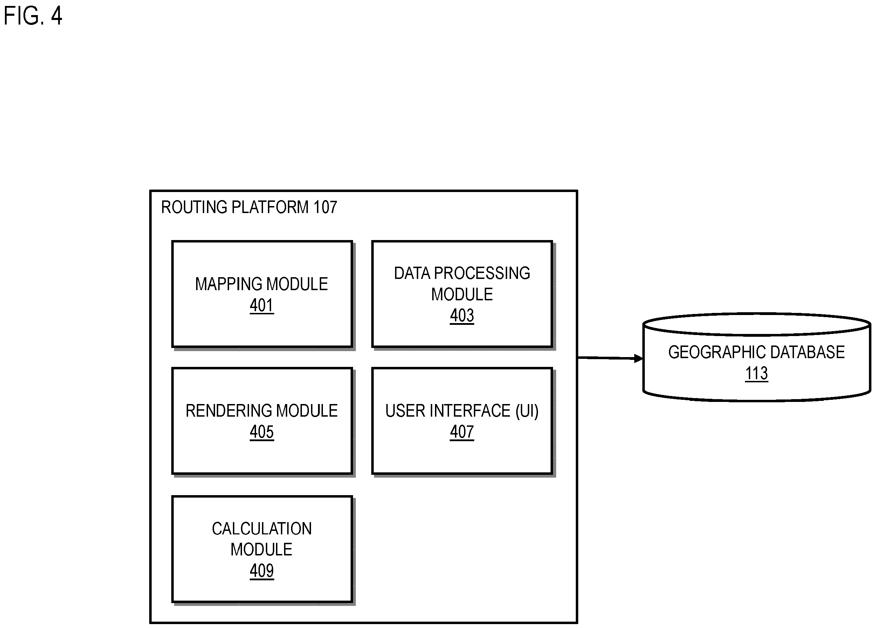

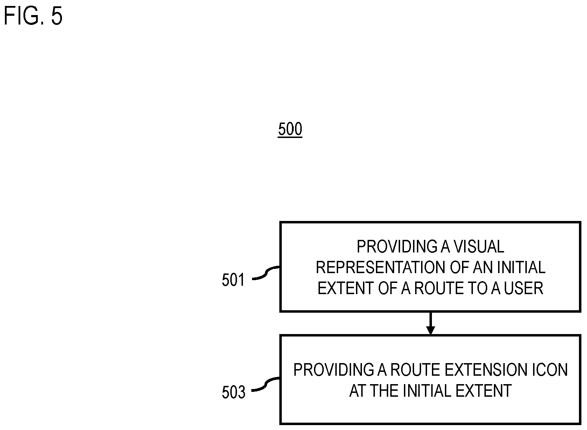

FIG. 4 is a diagram of the components of the routing platform 107, according to one embodiment. By way of example, the routing platform 107 includes one or more components for presenting to a user of a vehicle an efficient visual representation of a complex route for finding a parking space for the vehicle. It is contemplated that the functions of these components may be combined in one or more components or performed by other components of equivalent functionality. In one embodiment, the routing platform 107 includes a mapping module 401, a data processing module 403, a rendering module 405, a user interface (UI) module 407, and a calculation module 409 with connectivity to the geographic database 113. The above presented modules and components of the routing platform 107 can be implemented in hardware, firmware, software, or a combination thereof. Though depicted as separate entities in FIG. 1, it is contemplated that the routing platform 107 may be implemented as a module of any of the components of the system 100. In another embodiment, the routing platform 107 and/or one or more of the modules 401-409 may be implemented as a cloud-based service, local service, native application, or combination thereof. The functions of the routing platform 107 and/or the modules 401-409 are discussed with respect to FIG. 5 below.

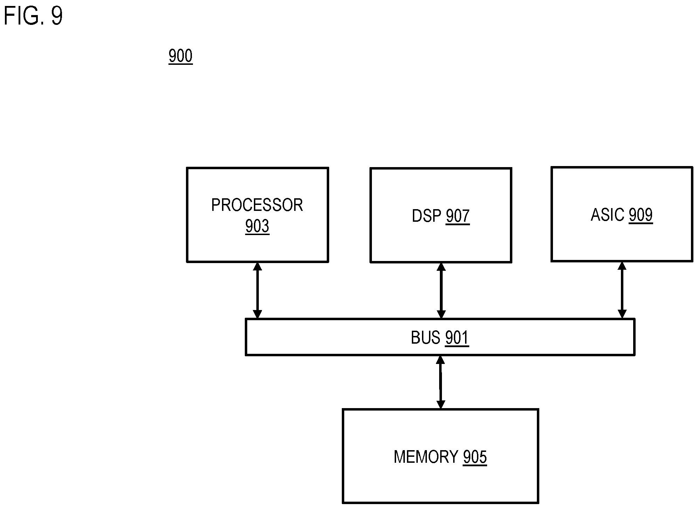

FIG. 5 is a flowchart of a process for presenting to a user of a vehicle (e.g., a vehicle 101) an efficient visual representation of a complex route for finding a parking space for the vehicle (i.e., a parking search route). In various embodiments, the routing platform 107 and/or the modules 401-409 may perform one or more portions of the process 500 and may be implemented in, for instance, a chip set including a processor and a memory as shown in FIG. 9. As such, the routing module platform 107 and/or modules 401-409 can provide means for accomplishing various parts of the process 500, as well as means for accomplishing embodiments of other processes described herein in conjunction with other components of the system 100. Although the process 500 is illustrated and described as a sequence of steps, it is contemplated that various embodiments of the process 500 may be performed in any order or combination and need not include all of the illustrated steps.

In one embodiment, the route comprises road segments having potential parking spaces for the vehicle within a threshold of a destination (e.g., within a walking distance). In another embodiment, the route circles in the vicinity of a location until a condition is met, wherein the route comprises road segments within a threshold of the location. By way of example, the route may circle in the vicinity of a friend's or colleague's home and the condition may be met when the friend or colleague is ready to be picked up by a user of a vehicle 101 (e.g., a driver or an operator) and/or a vehicle 101 (e.g., an autonomous vehicle) to go work, a POI (e.g., a restaurant), etc. In another example, the route may circle in the vicinity of a school and the condition may be met when the students attending the school are picked up by a user of vehicle 101 and/or a vehicle 101 and brought to school. In a further example, the route may circle in the vicinity of an airport, a sporting or entertainment venue, etc. and the condition may be met when the travelers or the attendees are picked up by a user of a vehicle 101 and/or a vehicle 101 from one or more satellite locations and brought to the airport or the venue, respectively. In one embodiment, the route can be any navigation or complex route that is to be presented to an end user in a vehicle (e.g., a vehicle 101). As discussed above, the route can include but is not limited to a parking search route or other complex navigation route (e.g., a route that includes self-intersections, loops, etc. that can be visually confusing to render). This route can be computed by the mapping module 401 or otherwise provided to the mapping module 401. For example, the route may have no specified destination and/or may be traveled until a condition is achieved (e.g., all students are picked up before the start of school).

In one embodiment, the condition is finding a parking space (e.g., for a vehicle 101) proximate to or in the vicinity of at a destination specified by a user (e.g., within a distance-based threshold, a time-based threshold, or a combination thereof). By way of example, the destination may be any POI such as a home, an office, a restaurant, a hospital, a shop, a park, a playground, a museum, a sport or an entertainment venue, etc. that a user or driver of a vehicle (e.g., a vehicle 101) wants to park at or near, but that does not have convenient available parking (e.g., an attached parking lot or parking structure). Typically, such destinations are in densely populated areas (e.g., a city center) and do not have convenient available parking due to the high costs associated with such properties. In one embodiment, a user can specify the destination through an interaction or input (e.g., a touch, a voice command, a gesture, etc.) with an application 111 (e.g., a navigation application) associated with a UE 105, a vehicle 101, or a combination thereof. By way of example, the computed route may be considered a complex route because the route can be traveled infinitely, endlessly, indeterminately, etc. until the condition is met (i.e., the user parks). In this way, the mapping module 403 may continue to render or visualize the route (e.g., via an embedded navigation system) until the user parks or ends the route. For example, the route may "circle" around itself or along one or more streets around the destination before an available parking space is found. The problem with such complex parking search routes; however, is that they can become very hard to quickly and efficiently read when being visualized to a user in a vehicle, especially if a user is having difficulty finding parking. For example, the rendered road segments may start to overlap, intersect, or make loops, with previously traveled portions, portions not yet traveled, or a combination thereof, all which can prevent a user from knowing what is coming ahead without being confused by the information. Other navigation routes that can be used according to the process 500 can include any route wherein a user is in a vehicle 101 and the user and/or the vehicle 101 (e.g., an autonomous vehicle) is searching for someone (e.g., one or more additional passengers), something (e.g., one or more pick-up/drop-off locations, one or more gas or charging stations, etc.), or a combination thereof and the visualized route may continue, overlap, intersect, and/or loop, etc. until the someone and/or something is located (i.e., a condition is met).

In step 501, upon the data processing module 403 determining in conjunction with the mapping module 401 that a visual representation of the route (e.g., a parking search route) meets a criterion of complexity (i.e., cannot be displayed without confusing the user), the rendering module 405 in connection with the UI module 407 provides a visual representation of an initial extent of the route to a user in a vehicle (e.g., a vehicle 101) in a user interface (e.g., a UE 105). In one embodiment, the initial extent comprises a portion of the route ahead of a current position of the user and the visual representation of the initial extent does not meet the criterion for complexity (i.e., can be displayed without confusion of the user). By way of example, the initial extent may be the minimal amount of the route ahead of the current position of the user that the calculation module 409 determines is useful and/or visually appealing to the user. For example, a visualization or rendering of a parking search route at the end of the destination guidance route when there are still hours of traveling before the destination is likely to make the route hard to read and/or confuse the user. This is especially true at higher zoom levels (e.g., in a route overview mode). Likewise, a visualization or rendering of previously traveled portions when a user is searching for parking is likely to make the route hard to read and/or confuse the user.

In one embodiment, the rendering module 405 renders another extent of the route beyond the initial extent rendered in the user interface based on the mapping module 401 determining that a location of the user of the route is at or within a proximity threshold of the initial extent (e.g., the user is about to complete traveling the initial extent of the route). In this regard, the rendering module 405 can provide the visual representation to the user dynamically. Specifically, in one embodiment, the calculation module 409 is constantly updating the criterion for complexity (i.e., the amount that can or cannot be displayed without confusion of the user) and the rendering module 405 is constantly updating the presentation or rendering within the computed limits as the user travels the route.

In one embodiment, the calculation module 409 determines the visual representation of the initial extent of the route based on a criterion for complexity or a route limit. In one instance, the criterion or route limit is a structural and/or aesthetical component of the route (e.g., intersections, overlaps, turns, walk times, etc.). In one embodiment, the criterion for complexity includes avoiding at least one of: (1) an overlap of two or more road segments; (2) an intersection of two or more road segments; and (3) a making of a loop with two or more road segments. In one instance, the road segments have potential parking spaces for the vehicle 101 within a threshold of the destination (e.g., a walkable or walking distance). By way of example, an intersection of two or more road segments comprises self-intersecting segments or a perpendicular crossing of the segments. By way of another example, a loop passes through the same node (e.g., an intersection) without overlapping. In one instance, the calculation module 409 also determines the criterion of complexity based on a route aesthetic criterion, a route readability criterion, or a combination thereof. By way of example, an aesthetically pleasing and/or readable route may be a simple route that includes the minimal amount of information needed to find a parking spot. Further, the calculation module 409 determines the criterion for complexity, in one instance, based on a speed of a vehicle 101 traveling the route. By way of example, because the calculation module 409 is constantly updating the route as the user drives or travels it, the criterion of complexity corresponds to the speed of the vehicle 101 (i.e., the faster or slower that the vehicle 101 moves, the faster or slower that the calculation module 409 needs to determine the criterion).

In one embodiment, the calculation module 409 can decrease the initial extent provided to the user based on determining an increase in the potential parking spaces on the road segments of the route and the calculation module 409 can increase the initial extent provided to the user based on determining a decrease in the in the potential parking spaces on the road segments of the route. By way of example, the data processing module 403 may provide parking space data stored in or accessible via the geographic database 113, a digital map, or a combination thereof. In one embodiment, the data process module 401 may provide parking space data based on one or more parking related factors. For example, the one or more relevant parking related factors may include temporal factors (e.g., time of day, day of week); contextual factors (e.g., starting and/or ending times of an event); regulatory factors (e.g., no parking permitted), or a combination thereof.

In one embodiment, the data processing module 403 provides parking space data relative to a zone around the destination. For example, the mapping module 401 and/or the calculation module 409 can define the zone based on a driving situation and/or a walking distance. In one embodiment, the mapping module 401 can compute the zone to include at least one or more roads or links that would permit the user or the driver of a vehicle 101 to find available parking. In one instance, the calculation module 409 can define the zone such that when a user finds parking, they are less than a distance-based threshold, a time-based threshold, or a combination thereof from the destination (e.g., within walking distance). In one embodiment, the data processing module 403 can then provide the parking space data to the rendering module 405 for rendering of the initial extent of the route to the user in a user interface (e.g., a UE 105). By way of example, if a user is likely to quickly find a spot, the initial extent presented may be shorter than a route which would have lower parking chances. In one instance, the calculation module 409 determines a stricter criterion of complexity, hence a shorter route, where the user is passing through road segments that are likely to have available parking and the calculation module 409 determines a more generous criterion, hence a longer route, where the user is passing through road segments that are unlikely to have available parking.

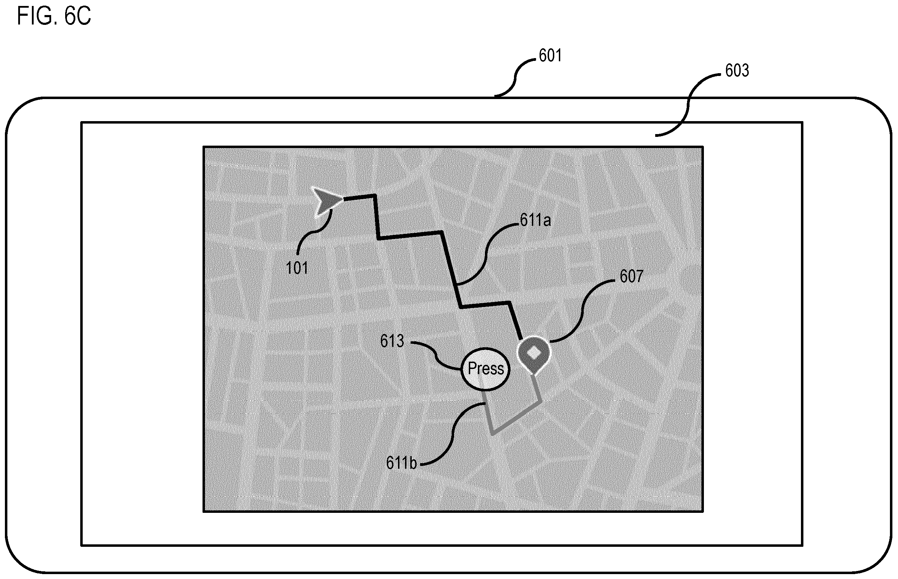

In step 503, the rendering module 405 in connection with the UI module 407 provides a route extension icon rendered at the initial extent in the user interface (e.g., a UE 105). In one embodiment, the rendering module 405 renders or presents another extent of the route beyond the initial extent rendered in the user interface (e.g., an embedded navigation system, a mobile device, or a combination thereof) based on the UI module 407 detecting a user interaction with the route extension icon in the user interface (e.g., a UE 105). Specifically, in one instance, the visual representation includes a route extension icon rendered at the initial extent of the route in the user interface. An example of a route extension icon is depicted in FIG. 6C. In one embodiment, the UI module 407 enables a user (e.g., a user or a driver of a vehicle 101) to extend the presentation of the route beyond the initial extent at any time. Whereas in one instance, the route "unlocks" itself when the user passes the intersection point with the "limit" of the route without any user interaction (i.e., dynamically), in another instance, the UI module 407 enables a user to manually preview one or more future portions or segments of the route irrespective of the user's location. For example, a user may extend the route by manually pressing the route extension icon (e.g., via an application 111) to see how the route further expands (even if endlessly). In another example, the rendering module 405 can render a route extension icon when the user or the driver of a vehicle 101 is stopped (e.g., at a traffic light or a stop sign) so that the user or the driver can preview a few more maneuvers. Further, in one embodiment, the rendering module 405 can extend the route based on the UI module 407 receiving a voice command (e.g., "show me more").

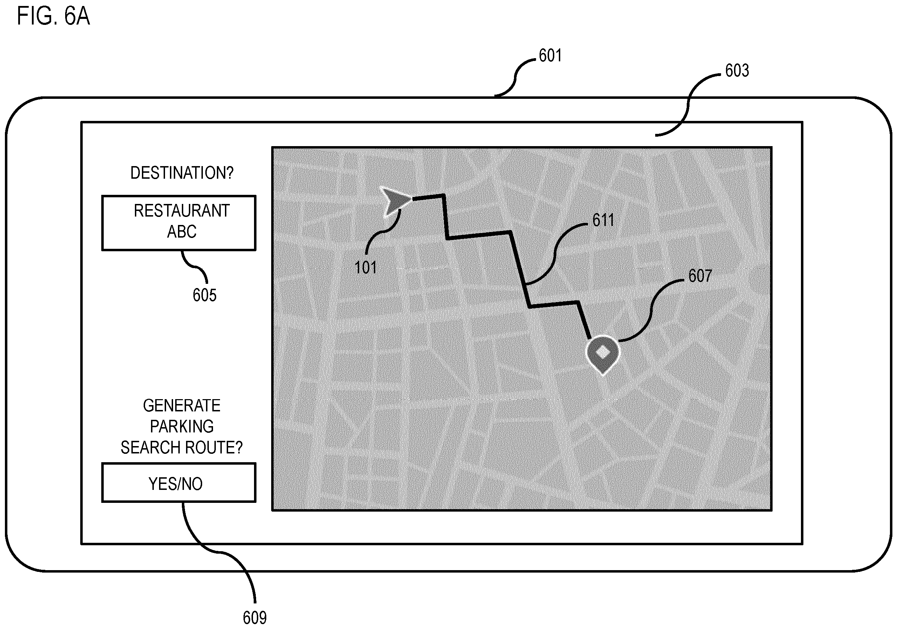

FIGs. 6A-6D are diagrams of example user interfaces for presenting to a user of a vehicle an efficient visual representation of a complex route for finding a parking space for the vehicle or other complex/potentially visually confusing navigation routes), according to one embodiment. In this example, a UI 601 is generated for a UE 105 (e.g., an embedded navigation system, a mobile device, or a combination thereof) that includes a display 603 that enables a user to access a navigation application 111 of the system 100 to initiate the visualization of a complex route, as described above. In this example, a driver of a vehicle 101 uses the input 605 of the UI 601 to enter the destination 607 (e.g., "Restaurant ABC"). In this instance, the destination 607 is in a nearby city center. In one embodiment, the system 100 can determine that the destination 607 does not have any convenient parking (e.g., via data or information collected from the geographic database 113). Accordingly, in one embodiment, the system 100 can ask the user if she or he wants the system 100 to present a visual representation of a route for finding a parking space for the vehicle 101 in the UI 601 (i.e., present a parking search route). In this example, the driver uses the input 609 to prompt the system 100 in the affirmative (e.g., by tapping "yes"). As described above, if the system 100 were to simultaneously render the complete destination guidance route and/or parking search route to the destination 607, the route could become very hard to read and/or confusing to the user.

In one embodiment, the system 100 determines the part or portions of the route that can be displayed without confusing the user (i.e., the initial extent that does not meet the criterion for complexity and/or would confuse the user). Specifically, the system 100 dynamically computes the limit of the route to be presented and then updates the route as the user drives or travels along the route. In this instance, the system 100 can determine to present only the portion of the route 611 (e.g., segment 611a) that is within an aesthetic and/or readability limit given the determined location of the user or the driver of the vehicle 101 (e.g., at home or a start of the journey). For example, the system 100 can determine that at this distance and/or time from the location 607, providing parking search information to the user would likely decrease the readability of the route 611 and, therefore, lead to a potentially bad user experience.

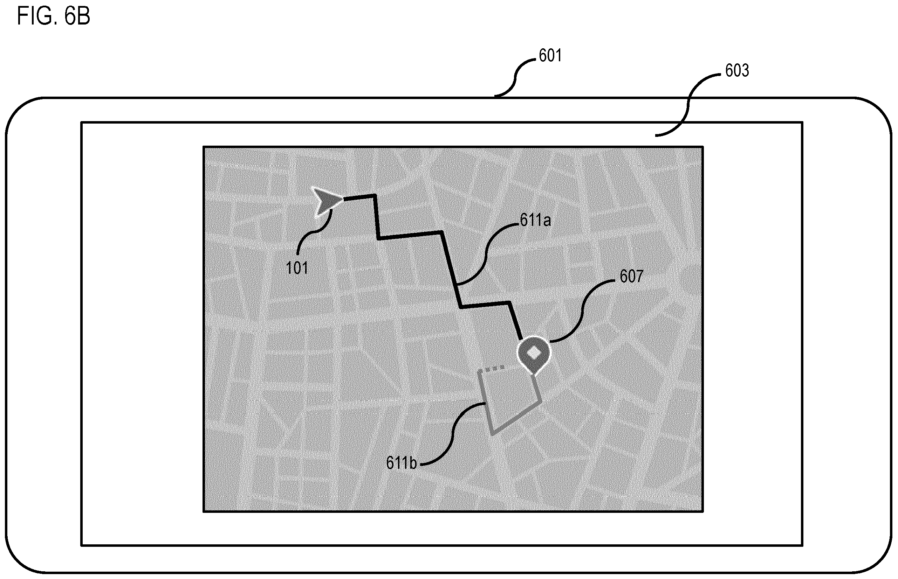

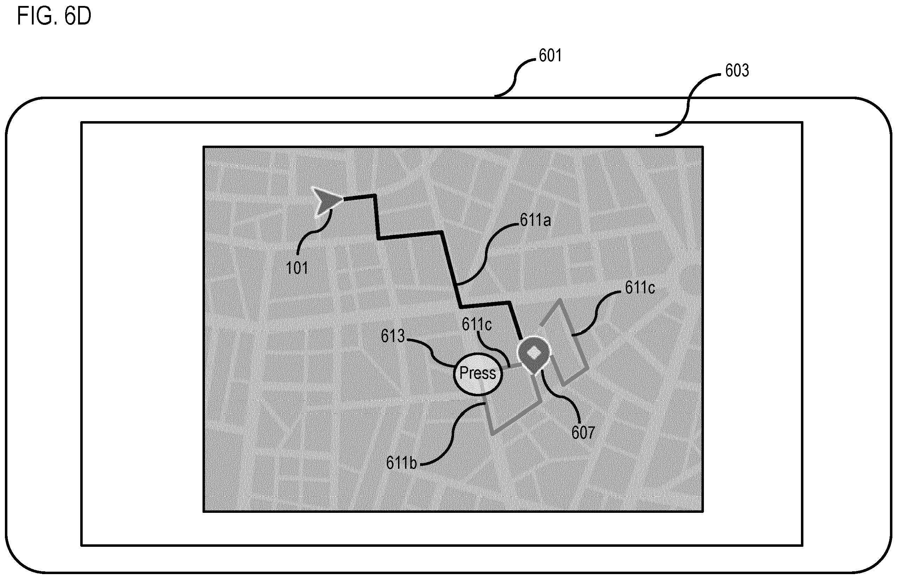

Alternatively, in one embodiment, the system 100 can show the user a next step (e.g., segment 611b), as depicted in FIG. 6B, but only enable or allow additional previews through a user interaction with the route extension icon 613 in the UI 601, as depicted in FIGs. 6C and 6D, respectively. Referring to FIG. 6B, in one embodiment, the system 100 renders the segment 611b up until the limit where the segment 611b would intersect segment 611a or itself at or near the destination 607 (i.e., the route 611 would meet the criterion for complexity). As described above, the reason for limiting the rendering in this instance is that intersecting route segments may reduce the readability of the route 611.

Referring to FIG. 6C, in one embodiment, once the system 100 presents the route 611 to a limit (i.e., an initial extent), the system 100 can enable the user to manually extend the route 611 past the virtual limit (i.e., view another extent) by interacting with the route extension icon 613 (e.g., via a touch, a tap, a gesture, or the like). It is contemplated that the user could also interact with the route extension icon 613 through a voice command (e.g., "show me more"). Once the system 100 determines an interaction by the user, the system 100 can extend the route 611 (e.g., segment 611c). In one embodiment, the system 100 may extend the route 611 one segment at a time corresponding to each interaction with the route extension icon 613 (e.g., a tap or a press), the system 100 may extend the route 611 completely in response to a double tap or long press of the route extension icon 613, or a combination thereof. In one embodiment, the system 100 discontinues rendering the segment 611c once the user releases/finishes interacting with the route extension icon 613 so that the user-friendly guidance can continue.

Returning to FIG. 1, in one embodiment, the UEs 105 can be associated with any of the vehicles 101 or a user or driver of a vehicle 101. By way of example, the UEs 105 can be any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, fitness device, television receiver, radio broadcast receiver, electronic book device, game device, devices associated with one or more vehicles or any combination thereof, including the accessories and peripherals of these devices, or any combination thereof. It is also contemplated that a UE 105 can support any type of interface to the user (such as "wearable" circuitry, etc.). In one embodiment, the one or more vehicles 101 may have cellular or wireless fidelity (Wi-Fi) connection either through the inbuilt communication equipment or from a UE 105 associated with the vehicles 101. Also, the UEs 105 may be configured to access the communication network 109 by way of any known or still developing communication protocols. In one embodiment, the UEs 105 may include the routing platform 107 to present to a user in a vehicle 101 a visual representation of a route for finding a parking space for the vehicle 101(i.e., a parking search route).

In one embodiment, the routing platform 107 performs the process for presenting to a user of a vehicle 101 an efficient visual representation of a complex route for finding a parking space for the vehicle 101 as discussed with respect to the various embodiments described herein. In one embodiment, the routing platform 107 can be a standalone server or a component of another device with connectivity to the communication network 109. For example, the component can be part of an edge computing network where remote computing devices (not shown) are installed along or within proximity of an intended destination (e.g., a city center). In one embodiment, the routing platform 107 has connectivity over the communication network 109 to the services platform 117 (e.g., an OEM platform) that provides one or more services 119a-119n (also collectively referred to herein as services 119) (e.g., traffic/routing services). By way of example, the services 119 may also be other third-party services and include mapping services, navigation services, parking services, travel planning services, notification services, social networking services, content (e.g., audio, video, images, etc.) provisioning services, application services, storage services, contextual information determination services, location-based services, information-based services (e.g., weather, news, etc.), etc.

In one embodiment, content providers 121a-121n (also collectively referred to herein as content providers 121) may provide content or data (e.g., navigation-based content such as destination information, routing instructions, POI data, historical data, etc.) to the vehicles 101, the routing platform 107, the UEs 105, the applications 111, the geographic database 113, the services platform 117, and the services 119. The content provided may be any type of content, such as map content, contextual content, audio content, video content, image content, etc. In one embodiment, the content providers 121 may also store content associated with the vehicles 101, the UEs 105, the routing platform 107, the applications 111, the geographic database 113, the services platform 117, and/or the services 119. In another embodiment, the content providers 121 may manage access to a central repository of data, and offer a consistent, standard interface to data, such as a repository of the geographic database 113.

By way of example, as previously stated the vehicle sensors 103 may be any type of sensor. In certain embodiments, the vehicle sensors 103 may include, for example, a global positioning system (GPS) sensor for gathering location data, a network detection sensor for detecting wireless signals or receivers for different short-range communications (e.g., Bluetooth, Wi-Fi, light fidelity (Li-Fi), near field communication (NFC) etc.), temporal information sensors, a camera/imaging sensor for gathering image data (e.g., lights or exhaust associated with a vehicle 101 about to leave a parking spot), velocity sensors, and the like. In another embodiment, the vehicle sensors 103 may include sensors (e.g., mounted along a perimeter of the vehicle 101) to detect the relative distance of the vehicle from lanes or roadways, the presence of other vehicles 101, pedestrians, animals, traffic lights, road features (e.g., curves) and any other objects, or a combination thereof. In one scenario, the vehicle sensors 103 may detect weather data, traffic information, or a combination thereof. In one example embodiment, the vehicles 101 may include GPS receivers to obtain geographic coordinates from satellites 115 for determining current or live location and time. Further, the location can be determined by a triangulation system such as A-GPS, Cell of Origin, or other location extrapolation technologies when cellular or network signals are available. In another example embodiment, the services 119 may provide in-vehicle navigation services.

The communication network 109 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (Wi-Fi), wireless LAN (WLAN), Bluetooth®, Internet Protocol (IP) data casting, satellite, mobile ad-hoc network (MANET), and the like, or any combination thereof.

In one embodiment, the routing platform 107 may be a platform with multiple interconnected components. By way of example, the routing platform 107 may include multiple servers, intelligent networking devices, computing devices, components and corresponding software for presenting to a user of a vehicle 101 an efficient visual representation of a complex route for finding a parking space for the vehicle 101. In addition, it is noted that the routing platform 107 may be a separate entity of the system 100, a part of the services platform 117, the one or more services 119, or the content providers 121.

In one embodiment, the geographic database 113 stores information regarding parking spot availability in a zone around or a threshold from a destination (e.g., available parking location, historic parking probability data, parking restriction data, etc.). In one instance, the geographic database 113 also stores driving situation data (e.g., historic or current traffic levels) and walking distance (e.g., average walk times). The information may be any of multiple types of information that can provide means for providing navigation-based content (e.g., a parking search route). In another embodiment, the geographic database 113 may be in a cloud and/or in a vehicle 101, a UE 105, or a combination thereof.

By way of example, the vehicles 101, the UEs 105, the routing platform 107, the applications 111, the geographic database 113, the satellites 115, the services platform 117, the services 119, and the content providers 121 communicate with each other and other components of the communication network 109 using well known, new or still developing protocols. In this context, a protocol includes a set of rules defining how the network nodes within the communication network 109 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

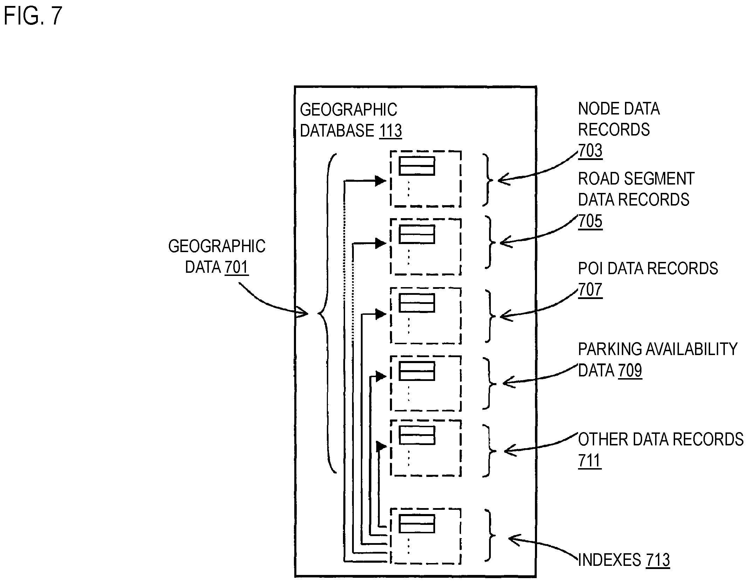

FIG. 7 is a diagram of the geographic database 113, according to one embodiment. In one embodiment, parking search route information, parking spot availability data, and/or any other information used or generated by the system 100 with respect to presenting to a user of a vehicle an efficient visual representation of a complex route for finding a parking space for the vehicle can be stored, associated with, and/or linked to the geographic database 113 or data thereof. In one embodiment, the geographic or map database 113 includes geographic data 701 used for (or configured to be compiled to be used for) mapping and/or navigation-related services, such as for route information, service information, estimated time of arrival information, location sharing information, speed sharing information, and/or geospatial information sharing, according to exemplary embodiments. For example, the geographic database 113 includes node data records 703, road segment or link data records 705, POI data records 707, parking availability data 709, other data records 711, and indexes 713, for example. More, fewer or different data records can be provided. In one embodiment, the other data records 711 include cartographic ("carto") data records, routing data, and maneuver data. One or more portions, components, areas, layers, features, text, and/or symbols of the POI or event data can be stored in, linked to, and/or associated with one or more of these data records. For example, one or more portions of the POI, event data, or recorded route information can be matched with respective map or geographic records via position or GPS data associations (such as using known or future map matching or geo-coding techniques), for example. In one embodiment, the POI data records 707 may also include information on locations of traffic controls (e.g., stoplights, stop signs, crossings, etc.), driving restrictions (e.g., speed, direction of travel, etc.), or a combination thereof.

In exemplary embodiments, the road segment data records 705 are links or segments representing roads, streets, or paths, as can be used in calculating a likelihood of overlap, intersection, or looping between two or more route segments. The node data records 703 are end points corresponding to the respective links or segments of the road segment data records 705. The road link data records 705 and the node data records 703 represent a road network, such as used by vehicles, cars, and/or other entities. Alternatively, the geographic database 113 can contain path segment and node data records or other data that represent pedestrian paths or areas in addition to or instead of the vehicle road record data, for example.

The road link and nodes can be associated with attributes, such as geographic coordinates, street names, address ranges, speed limits, turn restrictions at intersections, and other navigation related attributes, as well as POIs, such as traffic controls (e.g., stoplights, stop signs, crossings, etc.), gas or petrol stations, hotels, restaurants, museums, stadiums, offices, shopping centers or malls, parking lots, automobile dealerships, auto repair shops, buildings, stores, parks, etc. The geographic database 113 can include data about the POIs and their respective locations in the POI data records 707 (e.g., proximity of convenient available parking such as an attached parking lot or parking structure). The geographic database 113 can also include data about places, such as cities, city centers, towns, or other communities, and other geographic features, such as bodies of water, mountain ranges, etc. Such place or feature data can be part of the POI data records 707 or can be associated with POIs or POI data records 707 (such as a data point used for displaying or representing a position of a city).

In one embodiment, the parking availability data 709 can include any data item used to detect or identify parking spaces, available parking spaces, or a combination thereof. In one instance, the parking availability data 709 can also include any data related to a vehicle in a parking space (e.g., time of parking, time remaining on a meter, etc.). In one embodiment, the parking availability data 709 in connection with the road segment data records 705 or separately can include any data item use to detect or identify a probability value to find a parking space on a road or segment (e.g., a historic value, a current value, or a combination thereof).

The geographic database 113 can be maintained by the content providers 121 in association with the services platform 117 (e.g., a map developer). The map developer can collect geographic data to generate and enhance the geographic database 113. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used.

The geographic database 113 can be a master geographic database stored in a format that facilitates updating, maintenance, and development. For example, the master geographic database 113 or data in the master geographic database 113 can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data or geospatial information is compiled (such as into a platform specification format (PSF) format) to organize and/or configure the data for performing map or navigation-related functions and/or services, such as map annotation, route calculation, route guidance, map display, speed calculation, distance and travel time functions, and other functions, by a navigation device, such as by a UE 105, for example. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

As mentioned above, the geographic database 113 can be a master geographic database, but in alternate embodiments, the geographic database 113 can represent a compiled navigation database that can be used in or with end user devices (e.g., a UE 105) to provide navigation-related functions. For example, the geographic database 113 can be used with the end user device to provide an end user with navigation features (e.g., a parking search route). In such a case, the geographic database 113 can be downloaded or stored on the end user device, such as in an application 111, or the end user device can access the geographic database 113 through a wireless or wired connection (such as via a server and/or the communication network 109), for example.

The processes described herein for presenting to a user of a vehicle an efficient visual representation of a complex route for finding a parking space for the vehicle may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

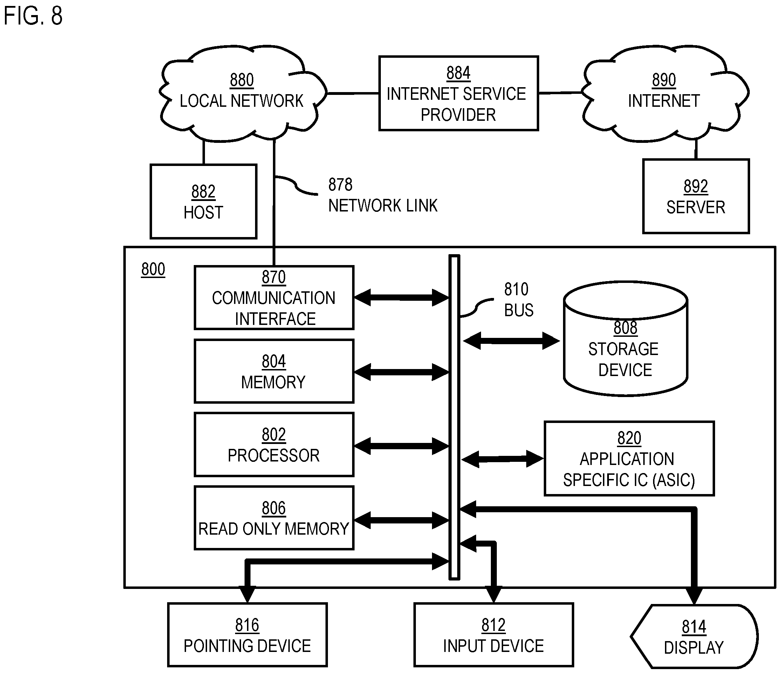

FIG. 8 illustrates a computer system 800 upon which an embodiment of the invention may be implemented. Computer system 800 is programmed (e.g., via computer program code or instructions) to present to a user of a vehicle an efficient visual representation of a complex route for finding a parking space for the vehicle as described herein and includes a communication mechanism such as a bus 810 for passing information between other internal and external components of the computer system 800. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 810 includes one or more parallel conductors of information so that information is transferred quickly among devices coupled to the bus 810. One or more processors 802 for processing information are coupled with the bus 810.

A processor 802 performs a set of operations on information as specified by computer program code related to presenting to a user of a vehicle an efficient visual representation of a complex route for finding a parking space for the vehicle. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 810 and placing information on the bus 810. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 800 also includes a memory 804 coupled to bus 810. The memory 804, such as a random-access memory (RAM) or other dynamic storage device, stores information including processor instructions for presenting to a user of a vehicle an efficient visual representation of a complex route for finding a parking space for the vehicle. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or other static storage device coupled to the bus 810 for storing static information, including instructions, that is not changed by the computer system 800. Some memory is composed of volatile storage that loses the information stored thereon when power is lost. Also coupled to bus 810 is a non-volatile (persistent) storage device 808, such as a magnetic disk, optical disk or flash card, for storing information, including instructions, that persists even when the computer system 800 is turned off or otherwise loses power.

Information, including instructions for presenting to a user of a vehicle an efficient visual representation of a complex route for finding a parking space for the vehicle, is provided to the bus 810 for use by the processor from an external input device 812, such as a keyboard containing alphanumeric keys operated by a human user, or a sensor. A sensor detects conditions in its vicinity and transforms those detections into physical expression compatible with the measurable phenomenon used to represent information in computer system 800. Other external devices coupled to bus 810, used primarily for interacting with humans, include a display device 814, such as a cathode ray tube (CRT) or a liquid crystal display (LCD), or plasma screen or printer for presenting text or images, and a pointing device 816, such as a mouse or a trackball or cursor direction keys, or motion sensor, for controlling a position of a small cursor image presented on the display 814 and issuing commands associated with graphical elements presented on the display 814. In some embodiments, for example, in embodiments in which the computer system 800 performs all functions automatically without human input, one or more of external input device 812, display device 814 and pointing device 816 is omitted.

In the illustrated embodiment, special purpose hardware, such as an application specific integrated circuit (ASIC) 820, is coupled to bus 810. The special purpose hardware is configured to perform operations not performed by processor 802 quickly enough for special purposes. Examples of application specific ICs include graphics accelerator cards for generating images for display 814, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 800 also includes one or more instances of a communications interface 870 coupled to bus 810. Communication interface 870 provides a one-way or two-way communication coupling to a variety of external devices that operate with their own processors, such as printers, scanners and external disks. In general, the coupling is with a network link 878 that is connected to a local network 880 to which a variety of external devices with their own processors are connected. For example, communication interface 870 may be a parallel port or a serial port or a universal serial bus (USB) port on a personal computer. In some embodiments, communications interface 870 is an integrated services digital network (ISDN) card or a digital subscriber line (DSL) card or a telephone modem that provides an information communication connection to a corresponding type of telephone line. In some embodiments, a communication interface 870 is a cable modem that converts signals on bus 810 into signals for a communication connection over a coaxial cable or into optical signals for a communication connection over a fiber optic cable. As another example, communications interface 870 may be a local area network (LAN) card to provide a data communication connection to a compatible LAN, such as Ethernet. Wireless links may also be implemented. For wireless links, the communications interface 870 sends or receives or both sends and receives electrical, acoustic or electromagnetic signals, including infrared and optical signals, that carry information streams, such as digital data. For example, in wireless handheld devices, such as mobile telephones like cell phones, the communications interface 870 includes a radio band electromagnetic transmitter and receiver called a radio transceiver. In certain embodiments, the communications interface 870 enables connection to the communication network 109 for presenting to a user of a vehicle an efficient visual representation of a complex route for finding a parking space for the vehicle.

The term non-transitory computer-readable medium is used herein to refer to any medium that participates in providing information to processor 802, including instructions for execution. Such a medium may take many forms, including, but not limited to, non-volatile media, volatile media and transmission media. Non-volatile or non-transitory media include, for example, optical or magnetic disks, such as storage device 808. Volatile media include, for example, dynamic memory 804. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

In one embodiment, a non-transitory computer-readable storage medium carrying one or more sequences of one or more instructions (e.g., computer code) which, when executed by one or more processors (e.g., a processor as described in FIG. 5), cause an apparatus (e.g., the routing platform 107, a vehicle 101, a UE 105, etc.) to perform any steps of the various embodiments of the methods described herein.

FIG. 9 illustrates a chip set 900 upon which an embodiment of the invention may be implemented. Chip set 900 is programmed to present to a user of a vehicle an efficient visual representation of a complex route for finding a parking space for the vehicle as described herein and includes, for instance, the processor and memory components described with respect to FIG. 8 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 900 includes a communication mechanism such as a bus 901 for passing information among the components of the chip set 900. A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively or in addition, the processor 903 may include one or more microprocessors configured in tandem via the bus 901 to enable independent execution of instructions, pipelining, and multithreading. The processor 903 may also be accompanied with one or more specialized components to perform certain processing functions and tasks such as one or more digital signal processors (DSP) 907, or one or more application-specific integrated circuits (ASIC) 909. A DSP 907 typically is configured to process real-world signals (e.g., sound) in real time independently of the processor 903. Similarly, an ASIC 909 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 903 and accompanying components have connectivity to the memory 905 via the bus 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to present to a user of a vehicle an efficient visual representation of a complex route for finding a parking space for the vehicle. The memory 905 also stores the data associated with or generated by the execution of the inventive steps.

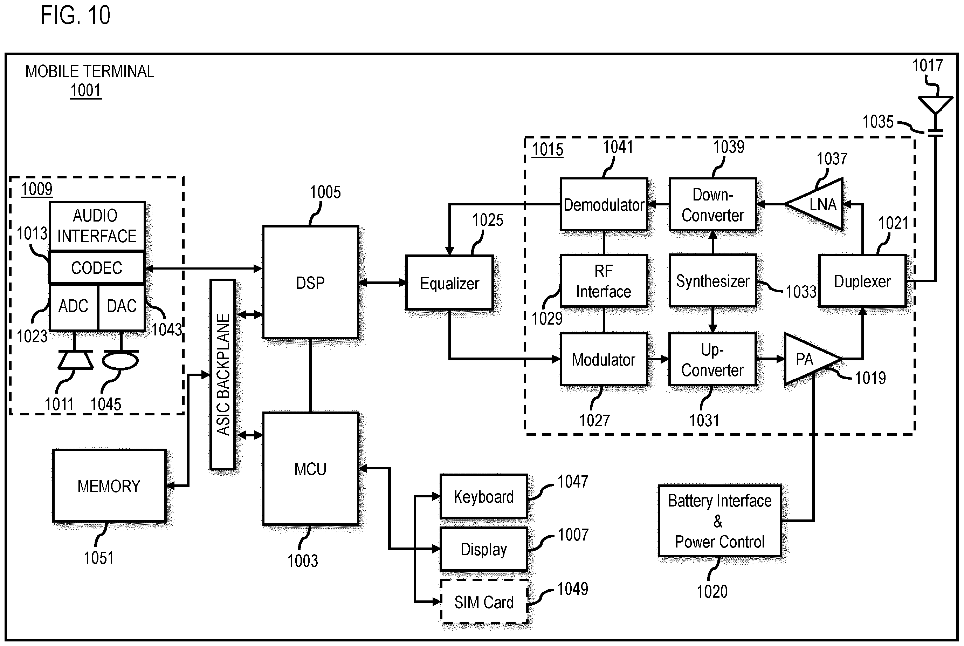

FIG. 10 is a diagram of exemplary components of a mobile terminal 1001 (e.g., handset or vehicle or part thereof) capable of operating in the system of FIG. 1, according to one embodiment. In one embodiment the mobile station can be the vehicle 101 or a component of the vehicle 101 configured to perform or more of the embodiments described herein. In another embodiment, the mobile station is an example of the UE and can perform embodiments of the processes associated with functions of the UE. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1003, a Digital Signal Processor (DSP) 1005, and a receiver/transmitter unit including a microphone gain control unit and a speaker gain control unit. A main display unit 1007 provides a display to the user in support of various applications and mobile station functions that offer automatic contact matching. An audio function circuitry 1009 includes a microphone 1011 and microphone amplifier that amplifies the speech signal output from the microphone 1011. The amplified speech signal output from the microphone 1011 is fed to a coder/decoder (CODEC) 1013.

A radio section 1015 amplifies power and converts frequency in order to communicate with a base station, which is included in a mobile communication system, via antenna 1017. The power amplifier (PA) 1019 and the transmitter/modulation circuitry are operationally responsive to the MCU 1003, with an output from the PA 1019 coupled to the duplexer 1021 or circulator or antenna switch, as known in the art. The PA 1019 also couples to a battery interface and power control unit 1020.

In use, a user of mobile station 1001 speaks into the microphone 1011 and his or her voice along with any detected background noise is converted into an analog voltage. The analog voltage is then converted into a digital signal through the Analog to Digital Converter (ADC) 1023. The control unit 1003 routes the digital signal into the DSP 1005 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), WiFi, satellite, and the like.

The encoded signals are then routed to an equalizer 1025 for compensation of any frequency-dependent impairments that occur during transmission though the air such as phase and amplitude distortion. After equalizing the bit stream, the modulator 1027 combines the signal with a RF signal generated in the RF interface 1029. The modulator 1027 generates a sine wave by way of frequency or phase modulation. In order to prepare the signal for transmission, an up-converter 1031 combines the sine wave output from the modulator 1027 with another sine wave generated by a synthesizer 1033 to achieve the desired frequency of transmission. The signal is then sent through a PA 1019 to increase the signal to an appropriate power level. In practical systems, the PA 1019 acts as a variable gain amplifier whose gain is controlled by the DSP 1005 from information received from a network base station. The signal is then filtered within the duplexer 1021 and optionally sent to an antenna coupler 1035 to match impedances to provide maximum power transfer. Finally, the signal is transmitted via antenna 1017 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1001 are received via antenna 1017 and immediately amplified by a low noise amplifier (LNA) 1037. A down-converter 1039 lowers the carrier frequency while the demodulator 1041 strips away the RF leaving only a digital bit stream. The signal then goes through the equalizer 1025 and is processed by the DSP 1005. A Digital to Analog Converter (DAC) 1043 converts the signal and the resulting output is transmitted to the user through the speaker 1045, all under control of a Main Control Unit (MCU) 1003-which can be implemented as a Central Processing Unit (CPU) (not shown).

The MCU 1003 receives various signals including input signals from the keyboard 1047. The keyboard 1047 and/or the MCU 1003 in combination with other user input components (e.g., the microphone 1011) comprise a user interface circuitry for managing user input. The MCU 1003 runs a user interface software to facilitate user control of at least some functions of the mobile station 1001 to present to a user of a vehicle an efficient visual representation of a complex route for finding a parking space for the vehicle. The MCU 1003 also delivers a display command and a switch command to the display 1007 and to the speech output switching controller, respectively. Further, the MCU 1003 exchanges information with the DSP 1005 and can access an optionally incorporated SIM card 1049 and a memory 1051. In addition, the MCU 1003 executes various control functions required of the station. The DSP 1005 may, depending upon the implementation, perform any of a variety of conventional digital processing functions on the voice signals. Additionally, DSP 1005 determines the background noise level of the local environment from the signals detected by microphone 1011 and sets the gain of microphone 1011 to a level selected to compensate for the natural tendency of the user of the mobile station 1001.

The CODEC 1013 includes the ADC 1023 and DAC 1043. The memory 1051 stores various data including call incoming tone data and is capable of storing other data including music data received via, e.g., the global Internet. The software module could reside in RAM memory, flash memory, registers, or any other form of writable non-transitory computer readable storage medium known in the art. The memory device 1051 may be, but not limited to, a single memory, CD, DVD, ROM, RAM, EEPROM, optical storage, or any other non-volatile storage medium capable of storing digital data.

An optionally incorporated SIM card 1049 carries, for instance, important information, such as the cellular phone number, the carrier supplying service, subscription details, and security information. The SIM card 1049 serves primarily to identify the mobile station 1001 on a radio network. The card 1049 also contains a memory for storing a personal telephone number registry, text messages, and user specific mobile station settings.

While the invention has been described in connection with a number of embodiments and implementations, the invention is not so limited but covers various obvious modifications which fall within the purview of the appended claims.

## Claims

1. A computer-implemented method (500) for presenting to a user in a vehicle a visual representation of a route for finding a parking space for the vehicle, wherein the route comprises road segments having potential parking spaces for the vehicle within a threshold of a destination, the method comprising:
upon determining that a visual representation of the route meets a criterion for complexity, wherein the criterion for complexity is that the route includes one or more overlaps, one or more self-intersections, and/or one or more loops, providing (501) a visual representation of an initial extent of the route to the user in a user interface, wherein the initial extent comprises a portion of the route ahead of a current position of the user and further wherein the visual representation of the initial extent does not meet the criterion for complexity; and
providing (503) a route extension icon rendered at the end of the initial extent in the user interface.

2. The method (500) of claim 1, further comprising:
rendering another extent of the route beyond the initial extent rendered in the user interface based on determining that a location of a user of the route is at or within a proximity threshold of the end of the initial extent.

3. The method (500) of claim 1, further comprising:
rendering another extent of the route beyond the initial extent rendered in the user interface based on detecting a user interaction with the route extension icon rendered in the user interface.

4. The method of claim 1, wherein the threshold is specified by the user.

5. The method (500) of claim 1, wherein the route is computed based on parking availability data associated with the road segments, within a zone around the destination, or a combination thereof.

6. The method (500) of claim 1, wherein the initial extent is decreased based on determining an increase in the potential parking spaces on the road segments, and wherein the initial extent is increased based on determining a decrease in the potential parking spaces on the road segments.

7. The method (500) of claim 1, wherein the criterion for complexity is based on a speed of a vehicle traveling the route.

8. An apparatus (800) for presenting to a user in a vehicle a visual representation of a route for finding a parking space for the vehicle, wherein the route comprises road segments having potential parking spaces for the vehicle within a distance of a destination, comprising:
at least one processor (802); and
at least one memory (804) including computer program code for one or more programs,
the at least one memory (804) and the computer program code configured to, with the at least one processor (802), cause the apparatus (800) to perform at least the following,
upon determining that a visual representation of the route meets a criterion for complexity, wherein the criterion for complexity is that the route includes one or more overlaps, one or more self-intersections, and/or one or more loops, provide a visual representation of an initial extent of the route to the user in a user interface, wherein the initial extent comprises a portion of the route ahead of a current position of the user and further wherein the visual representation of the initial extent does not meet the criterion for complexity; and
provide a route extension icon rendered at the end of the initial extent in the user interface.

9. The apparatus (800) of claim 8, wherein the apparatus is further caused to:
render another extent of the route beyond the initial extent rendered in the user interface based on determining that a location of a user of the route is at or within a proximity threshold of the end of the initial extent.

10. A non-transitory computer-readable storage medium for presenting to a user in a vehicle a visual representation of a route that circles in a vicinity of a location until a condition is met, wherein the route comprises road segments within a threshold of the location, carrying one or more sequences of one or more instructions which, when executed by one or more processors, cause an apparatus to at least perform the following steps:
upon determining that a visual representation of the route meets a criterion for complexity, wherein the criterion for complexity is that the route includes one or more overlaps, one or more self-intersections, and/or one or more loops, providing a visual representation of an initial extent of the route to the user in a user interface, wherein the initial extent comprises a portion of the route ahead of a current position of the user and further wherein the visual representation of the initial extent does not meet the criterion for complexity; and
providing a route extension icon rendered at the end of the initial extent in the user interface.

## Patentansprüche

1. Computerimplementiertes Verfahren (500) zum Präsentieren einer visuellen Darstellung einer Route zum Finden eines Parkplatzes für das Fahrzeug für einen Benutzer in einem Fahrzeug, wobei die Route Straßensegmente umfasst, die potenzielle Parkplätze für das Fahrzeug innerhalb eines Schwellenwertes eines Ziels aufweisen, wobei das Verfahren Folgendes umfasst:
nach einem Bestimmen, dass eine visuelle Darstellung der Route ein Kriterium für Komplexität erfüllt, wobei das Kriterium für Komplexität darin besteht, dass die Route eine oder mehrere Überlappungen, eine oder mehrere Selbstüberschneidungen und/oder eine oder mehrere Schleifen einschließt, Bereitstellen (501) einer visuellen Darstellung einer anfänglichen Ausdehnung der Route an den Benutzer in einer Benutzeroberfläche, wobei die anfängliche Ausdehnung einen Abschnitt der Route vor einer aktuellen Position des Benutzers umfasst und wobei ferner die visuelle Darstellung der anfänglichen Ausdehnung das Kriterium für Komplexität nicht erfüllt; und
Bereitstellen (503) eines Routenerweiterungssymbols, das an dem Ende der anfänglichen Ausdehnung in der Benutzeroberfläche gerendert wird.

2. Verfahren (500) nach Anspruch 1, das ferner Folgendes umfasst:
Rendern einer weiteren Ausdehnung der Route über die anfängliche Ausdehnung hinaus, die in der Benutzeroberfläche gerendert wird, basierend auf dem Bestimmen, dass ein Standort eines Benutzers der Route an oder innerhalb eines Näherungsschwellenwerts des Endes der anfänglichen Ausdehnung liegt.

3. Verfahren (500) nach Anspruch 1, das ferner Folgendes umfasst:
Rendern einer weiteren Ausdehnung der Route über die anfängliche Ausdehnung hinaus, die in der Benutzeroberfläche gerendert wird, basierend auf einem Erfassen einer Benutzerinteraktion mit dem Routenerweiterungssymbol, das in der Benutzeroberfläche gerendert wird.

4. Verfahren nach Anspruch 1, wobei der Schwellenwert durch den Benutzer angegeben wird.

5. Verfahren (500) nach Anspruch 1, wobei die Route basierend auf Parkverfügbarkeitsdaten berechnet wird, die mit den Straßensegmenten, innerhalb einer Zone um das Ziel herum oder einer Kombination davon verknüpft sind.

6. Verfahren (500) nach Anspruch 1, wobei die anfängliche Ausdehnung basierend auf dem Bestimmen einer Zunahme der potenziellen Parkplätze auf den Straßensegmenten verringert wird und wobei die anfängliche Ausdehnung basierend auf dem Bestimmen einer Abnahme der potenziellen Parkplätze auf den Straßensegmenten vergrößert wird.

7. Verfahren (500) nach Anspruch 1, wobei das Kriterium für die Komplexität auf einer Geschwindigkeit eines Fahrzeugs basiert, das die Route befährt.

8. Vorrichtung (800) zum Präsentieren einer visuellen Darstellung einer Route zum Finden eines Parkplatzes für das Fahrzeug für einen Benutzer in einem Fahrzeug, wobei die Route Straßensegmente umfasst, die potenzielle Parkplätze für das Fahrzeug innerhalb einer Entfernung eines Ziels aufweisen, die Folgendes umfasst:
wenigstens einen Prozessor (802); und
wenigstens einen Speicher (804), der Computerprogrammcode für ein oder mehrere Programme einschließt, wobei der wenigstens eine Speicher (804) und der Computerprogrammcode konfiguriert sind, um mit dem wenigstens einen Prozessor (802) die Vorrichtung (800) zu veranlassen, wenigstens das Folgende durchzuführen,
nach dem Bestimmen, dass eine visuelle Darstellung der Route ein Kriterium für Komplexität erfüllt, wobei das Kriterium für Komplexität darin besteht, dass die Route eine oder mehrere Überlappungen, eine oder mehrere Selbstüberschneidungen und/oder eine oder mehrere Schleifen einschließt, Bereitstellen einer visuellen Darstellung einer anfänglichen Ausdehnung der Route an den Benutzer in einer Benutzeroberfläche, wobei die anfängliche Ausdehnung einen Abschnitt der Route vor einer aktuellen Position des Benutzers umfasst und wobei ferner die visuelle Darstellung der anfänglichen Ausdehnung das Kriterium für Komplexität nicht erfüllt; und
Bereitstellen eines Routenerweiterungssymbols, das an dem Ende der anfänglichen Ausdehnung in der Benutzeroberfläche gerendert wird.

9. Vorrichtung (800) nach Anspruch 8, wobei die Vorrichtung ferner zu Folgendem veranlasst wird:
Rendern einer weiteren Ausdehnung der Route über die anfängliche Ausdehnung hinaus, die in der Benutzeroberfläche gerendert wird, basierend auf dem Bestimmen, dass ein Standort eines Benutzers der Route an oder innerhalb eines Näherungsschwellenwerts des Endes der anfänglichen Ausdehnung liegt.

10. Nichtflüchtiges computerlesbares Speichermedium zum Präsentieren einer visuellen Darstellung einer Route für einen Benutzer in einem Fahrzeug, die in der Nähe eines Ortes kreist, bis eine Bedingung erfüllt ist, wobei die Route Straßensegmente innerhalb eines Schwellenwertes des Ortes umfasst, das eine oder mehrere Sequenzen von einer oder mehreren Anweisungen trägt, die, wenn sie durch einen oder mehrere Prozessoren ausgeführt werden, eine Vorrichtung veranlassen, wenigstens die folgenden Schritte durchzuführen:
nach dem Bestimmen, dass eine visuelle Darstellung der Route ein Kriterium für Komplexität erfüllt, wobei das Kriterium für Komplexität darin besteht, dass die Route eine oder mehrere Überlappungen, eine oder mehrere Selbstüberschneidungen und/oder eine oder mehrere Schleifen einschließt, Bereitstellen einer visuellen Darstellung einer anfänglichen Ausdehnung der Route an den Benutzer in einer Benutzeroberfläche, wobei die anfängliche Ausdehnung einen Abschnitt der Route vor einer aktuellen Position des Benutzers umfasst und wobei ferner die visuelle Darstellung der anfänglichen Ausdehnung das Kriterium für Komplexität nicht erfüllt; und
Bereitstellen eines Routenerweiterungssymbols, das an dem Ende der anfänglichen Ausdehnung in der Benutzeroberfläche gerendert wird.

## Revendications

1. Procédé mis en œuvre par ordinateur (500) destiné à présenter à un utilisateur dans un véhicule une représentation visuelle d'un itinéraire afin de trouver une place de stationnement pour le véhicule, l'itinéraire comprenant des segments de route ayant des espaces de stationnement potentiels pour le véhicule à l'intérieur d'un seuil d'une destination, le procédé comprenant :
lors de la détermination du fait qu'une représentation visuelle de l'itinéraire répond à un critère de complexité, le critère de complexité étant que l'itinéraire comporte un ou plusieurs chevauchements, une ou plusieurs auto-intersections et/ou une ou plusieurs boucles, la fourniture (501) d'une représentation visuelle d'une étendue initiale de l'itinéraire à l'utilisateur dans une interface utilisateur, l'étendue initiale comprenant une partie de l'itinéraire en avant d'une position actuelle de l'utilisateur et en outre la représentation visuelle de l'étendue initiale ne répondant pas au critère de complexité ; et
la fourniture (503) d'une icône d'extension d'itinéraire rendue à la fin de l'étendue initiale dans l'interface utilisateur.

2. Procédé (500) selon la revendication 1, comprenant en outre :
le rendu d'une autre étendue de l'itinéraire au-delà de l'étendue initiale rendue dans l'interface utilisateur sur la base de la détermination du fait qu'un emplacement d'un utilisateur de l'itinéraire se trouve à ou dans un seuil de proximité de la fin de l'étendue initiale.

3. Procédé (500) selon la revendication 1, comprenant en outre :
le rendu d'une autre étendue de l'itinéraire au-delà de l'étendue initiale rendue dans l'interface utilisateur sur la base de la détection d'une interaction de l'utilisateur avec l'icône d'extension d'itinéraire rendue dans l'interface utilisateur.

4. Procédé selon la revendication 1, dans lequel le seuil est spécifié par l'utilisateur.

5. Procédé (500) selon la revendication 1, dans lequel l'itinéraire est calculé sur la base des données de disponibilité de stationnement associées aux segments de route, dans une zone autour de la destination, ou sur une combinaison de celles-ci.

6. Procédé (500) selon la revendication 1, dans lequel l'étendue initiale est diminuée sur la base de la détermination d'une augmentation des espaces de stationnement potentiels sur les segments de route, et dans lequel l'étendue initiale est augmentée sur la base de la détermination d'une diminution des espaces de stationnement potentiels sur les segments de route.

7. Procédé (500) selon la revendication 1, dans lequel le critère de complexité est basé sur une vitesse d'un véhicule parcourant l'itinéraire.

8. Dispositif (800) destiné à présenter à un utilisateur dans un véhicule une représentation visuelle d'un itinéraire afin de trouver une place de stationnement pour le véhicule, dans lequel l'itinéraire comprend des segments de route ayant des espaces de stationnement potentiels pour le véhicule à une distance d'une destination, comprenant :
au moins un processeur (802) ; et
au moins une mémoire (804) comportant un code de programme informatique pour un ou plusieurs programmes, l'au moins une mémoire (804) et le code de programme informatique étant configurés pour, avec l'au moins un processeur (802), amener l'appareil (800) à effectuer au moins l'une des actions suivantes,
lors de la détermination du fait qu'une représentation visuelle de l'itinéraire répond à un critère de complexité, le critère de complexité étant que l'itinéraire comporte un ou plusieurs chevauchements, une ou plusieurs auto-intersections et/ou une ou plusieurs boucles, la fourniture d'une représentation visuelle d'une étendue initiale de l'itinéraire pour l'utilisateur dans une interface utilisateur, l'étendue initiale comprenant une partie de l'itinéraire en avant d'une position actuelle de l'utilisateur et en outre la représentation visuelle de l'étendue initiale ne répondant pas au critère de complexité ; et
la fourniture d'une icône d'extension d'itinéraire rendue à la fin de l'étendue initiale dans l'interface utilisateur.

9. Appareil (800) selon la revendication 8, l'appareil étant en outre amené à :
rendre une autre étendue de l'itinéraire au-delà de l'étendue initiale rendue dans l'interface utilisateur sur la base de la détermination du fait qu'un emplacement d'un utilisateur de l'itinéraire se trouve à ou dans un seuil de proximité de la fin de l'étendue initiale.

10. Support de stockage non transitoire lisible par ordinateur destiné à présenter à un utilisateur dans un véhicule une représentation visuelle d'un itinéraire qui tourne autour d'un emplacement jusqu'à ce qu'une condition soit remplie, l'itinéraire comprenant des segments de route à l'intérieur d'un seuil de l'emplacement, portant une ou plusieurs séquences d'une ou plusieurs instructions qui, lorsqu'elles sont exécutées par un ou plusieurs processeurs, amènent un appareil à effectuer au moins les étapes suivantes :
lors de la détermination du fait qu'une représentation visuelle de l'itinéraire répond à un critère de complexité, le critère de complexité étant que l'itinéraire comporte un ou plusieurs chevauchements, une ou plusieurs auto-intersections et/ou une ou plusieurs boucles, la fourniture d'une représentation visuelle d'une étendue initiale de l'itinéraire pour l'utilisateur dans une interface utilisateur, l'étendue initiale comprenant une partie de l'itinéraire en avant d'une position actuelle de l'utilisateur et en outre la représentation visuelle de l'étendue initiale ne répondant pas au critère de complexité ; et
la fourniture d'une icône d'extension d'itinéraire rendue à la fin de l'étendue initiale dans l'interface utilisateur.
